# EUROPEAN PATENT APPLICATION

(11) **EP 3 043 137 A1**
(43) Date of publication of application: **13.07.2016**
(21) Application number: 14842199.3
(22) Date of filing: 01.09.2014
(51) Int. Cl.: F28F 1/40, B21C 37/06, B21C 37/08, B21D 53/06, F28D 1/047

(54) **HEAT TRANSFER PIPE, METHOD FOR MANUFACTURING HEAT TRANSFER PIPE, AND HEAT EXCHANGER**

(30) Priority: 03.09.2013 JP 2013182566
(71) Applicant: Sanoh Industrial Co., Ltd., Tokyo 150-0013 (JP)
(72) Inventor: GOTO, Naoya, Koga-shi Ibaraki 306-0041 (JP); ENDO, Takuma, Koga-shi Ibaraki 306-0041 (JP)
(74) Representative: dompatent von Kreisler Selting Werner - Partnerschaft von Patent- und Rechtsanwälten mbB
(86) International application number: PCT/JP2014/072953
(87) International publication number: WO 2015/033895

(57) **Abstract**

A heat transfer tube (10) provided with an undulating portion (12) at a tube inner face (10B) is formed by rolling up a metal sheet (11) formed with the undulating portion (12) into a tube shape, and joining together overlapped rolled-up portions of the metal sheet.

## Description

### Technical Field

The present invention relates to a heat transfer tube, a manufacturing method for a heat transfer tube, and a heat exchanger.

### Background Art

Japanese Patent Application Laid-Open (JP-A) No. 2000-121270 describes a copper heat transfer tube employed in a heat exchanger or the like. The heat transfer tube is formed by bending a copper sheet formed with plural grooves (including both continuous grooves and intermittent grooves) into a tube shape with the grooves facing the inside, and abutting and welding together both end portions of the copper sheet.

### SUMMARY OF INVENTION

### Technical Problem

However, since the heat transfer tube described in JP-A No. 2000-121270 is welded at both end portions of the copper sheet, the welded portion is liable to corrosion, and there is a concern of fluid leakage if a hole appears due to corrosion.

In consideration of the above circumstances, an object of the present invention is to provide a heat transfer tube that has excellent heat transfer characteristics, as well as preventing fluid leakage over a long period, a manufacturing method for the heat transfer tube, and a heat exchanger provided with the heat transfer tube.

### Solution to Problem

A heat transfer tube of a first aspect of the present invention is a heat transfer tube provided with a first undulating portion at a tube inner face, wherein the heat transfer tube is formed by rolling up a metal sheet formed with the first undulating portion into a tube shape, and joining together overlapped rolled-up portions of the metal sheet.

In the heat transfer tube of the first aspect, due to providing the first undulating portion to the tube inner face, the tube inner face has a larger surface area than when, for example, the tube inner face is configured with a flat profile, thereby increasing heat transmission efficiency from a fluid to the heat transfer tube and from the heat transfer tube to the fluid, namely giving excellent heat transfer properties.

The heat transfer tube is formed by rolling up the metal sheet, to which the first undulating portion has been formed in advance, into a tube shape. There are accordingly fewer restrictions to the shape and pattern of the first undulating portion than when, for example, the inner face of a metal tube formed by an extrusion process is subsequently formed with grooves (an undulating portion). Namely, there are high degrees of freedom for design in the first undulating portion. In the heat transfer tube described above, the heat transmission efficiency between the fluid and the heat transfer tube can accordingly be raised even further by making adjustments to the shape and pattern of the first undulating portion formed to the metal sheet.

Moreover, since the metal sheet is rolled up into a tube shape and overlapped rolled-up portions of the metal sheet are joined together in the heat transfer tube described above, the length of a joint portion from the tube inside to the tube outside can be made longer than when, for example, a metal sheet is bent around and both end portions thereof are joined (welded) together. Therefore, even when there is rapid corrosion at the joint portion, the spread of corrosion from the tube outside to the tube inside (or from the tube outside to the tube inside) of the joint portion can be delayed. Namely, the heat transfer tube enables fluid leakage to be prevented over a long period.

A heat transfer tube of a second aspect of the present invention is the heat transfer tube of the first aspect in which: an outside step face between a roll-up direction inside end portion and a roll-up direction outside end portion is formed at an outer face of the metal sheet rolled up into a tube shape, and the roll-up direction outside end portion is abutted against and joined to the outside step face.

In the heat transfer tube of the second aspect, the roll-up direction outside end portion is abutted against and joined to the outside step face of the metal sheet rolled up into a tube shape, thereby increasing the length of the joint portion from the tube inside to the tube outside.

A heat transfer tube of a third aspect of the present invention is the heat transfer tube of either the first aspect or the second aspect in which: an inside step face between a roll-up direction inside end portion and a roll-up direction outside end portion is formed at an inner face of the metal sheet rolled up into a tube shape, and the roll-up direction inside end portion is abutted against and joined to the inside step face.

In the heat transfer tube of the third aspect, the roll-up direction inside end portion is abutted against and joined to the inside step face of the metal sheet rolled up into a tube shape, thereby increasing the length of the joint portion from the tube inside to the tube outside.

A heat transfer tube of a fourth aspect of the present invention is the heat transfer tube of any one of the first aspect to the third aspect in which a second undulating portion with a different profile from first undulating portion is formed at inner face of an overlapped rolled-up portion of the metal sheet rolled up into a tube shape.

In the heat transfer tube of the fourth aspect, the second undulating portion is formed to the inner face of the overlapped rolled-up portion of the metal sheet rolled up into a tube shape, thereby increasing the joint surface area compared to when, for example, the inner face is formed with a flat profile. The length of the joint portion from the tube inside to the tube outside is accordingly made longer, and the joint strength of the overlapped rolled-up portions is increased.

A heat transfer tube of a fifth aspect of the present invention is the heat transfer tube of any one of the first aspect to the fourth aspect in which the metal sheet is configured from aluminum.

In the heat transfer tube of the fifth aspect, the metal sheet is configured from aluminum, thereby enabling a reduction in weight and a cost saving, while securing heat transmission efficiency.

A method of manufacturing a heat transfer tube of a sixth aspect of the present invention is a manufacturing method of a heat transfer tube provided with an undulating portion at a tube inner face, the method including: forming the undulating portion at metal sheet; rolling up the metal sheet into a tube shape with the undulating portion at an inner side; and joining together overlapped rolled-up portions of the metal sheet rolled up into a tube shape.

In the heat transfer tube manufacturing method of the sixth aspect of the present invention, first, the undulating portion is formed to the metal sheet. Next, the metal sheet is rolled up into a tube shape with the undulating portion on the inside. Then, overlapped rolled-up portions of the metal sheet rolled up into a tube shape are joined together to form the heat transfer tube provided with the undulating portion at the tube inner face. The thus formed heat transfer tube exhibits similar operation and advantageous effects to the heat transfer tube of the first aspect. Namely, the heat transfer tube manufactured by the above manufacturing method has excellent heat transfer characteristics, and enables fluid leakage to be prevented over a long period.

A heat exchanger of a seventh aspect of the present invention includes: the heat transfer tube of any one of the first aspect to the fifth aspect; and a metal fin that is configured in a plate shape and formed with a through hole penetrating in a plate thickness direction, the heat transfer tube being inserted into the through hole and an outer peripheral face of the heat transfer tube being joined to a hole wall of the through hole.

In the heat exchanger of the seventh aspect, the outer peripheral face of the heat transfer tube of any one of the first aspect to the fifth aspect is joined to the hole wall of the through hole formed in the fin, thereby increasing the heat transmission efficiency from the heat transfer tube to the fin and from the fin to the heat transfer tube.

### Advantageous Effects of Invention

As described above, the heat transfer tube of the present invention has excellent heat transfer characteristics, and enables fluid leakage to be prevented over a long period.

### BRIEF DESCRIPTION OF DRAWINGS

Fig. 1A is a cross-section of a heat transfer tube of a first exemplary embodiment, taken along an axis orthogonal direction.
Fig. 1B is an enlarged drawing illustrating in detail the portion of the heat transfer tube indicated by the arrow B in Fig. 1A.
Fig. 2 is an opened-out view of a tube inner face of the heat transfer tube illustrated in Fig. 1A, with a portion illustrated in an enlarged perspective view.
Fig. 3 is an enlarged cross-section of the heat transfer tube, taken along line 3X-3X in Fig. 2.
Fig. 4 is a face-on view of a heat exchanger employing the heat transfer tube of the first exemplary embodiment, with a portion of a fin illustrated in cross-section.
Fig. 5 is a schematic perspective view illustrating a forming device for forming the heat transfer tube of the first exemplary embodiment.
Fig. 6 is a plan view illustrating the forming device in Fig. 5.
Fig. 7 is a cross-section taken along a direction orthogonal to the length direction of a metal sheet employed when forming the heat transfer tube in Fig. 1A, illustrating a first undulating portion formed to one face of the metal sheet.
Fig. 8 is an opened-out view of a tube inner face of a first modified example of the heat transfer tube of the first exemplary embodiment, with a portion illustrated in an enlarged perspective view.
Fig. 9 is an opened-out view of a tube inner face of a second modified example of the heat transfer tube of the first exemplary embodiment, with a portion illustrated in an enlarged perspective view.
Fig. 10 is an opened-out view of a tube inner face of a third modified example of the heat transfer tube of the first exemplary embodiment, with a portion illustrated in an enlarged perspective view.
Fig. 11 is an enlarged cross-section illustrating a portion of a cross-section taken along the axial direction of a heat transfer tube of a second exemplary embodiment.
Fig. 12 is an enlarged cross-section illustrating a portion of a cross-section taken along the axial direction of a heat transfer tube of a third exemplary embodiment.
Fig. 13 is an enlarged cross-section illustrating a portion of a cross-section taken along an axis orthogonal direction of a heat transfer tube of a fourth exemplary embodiment.
Fig. 14 is a cross-section taken along a direction orthogonal to the length direction of a metal sheet employed when forming the heat transfer tube in Fig. 13, illustrating a first undulating portion and a second undulating portion formed to one face of the metal sheet.
Fig. 15 is a face-on view of a modified example of a fin of a heat exchanger of the first exemplary embodiment, with a portion illustrated in cross-section.

### DESCRIPTION OF EMBODIMENTS

Explanation follows regarding a heat transfer tube 10, and a manufacturing method of the heat transfer tube 10, in a first exemplary embodiment of a heat transfer tube, and a manufacturing method of a heat transfer tube, of the present invention, with reference to the drawings.

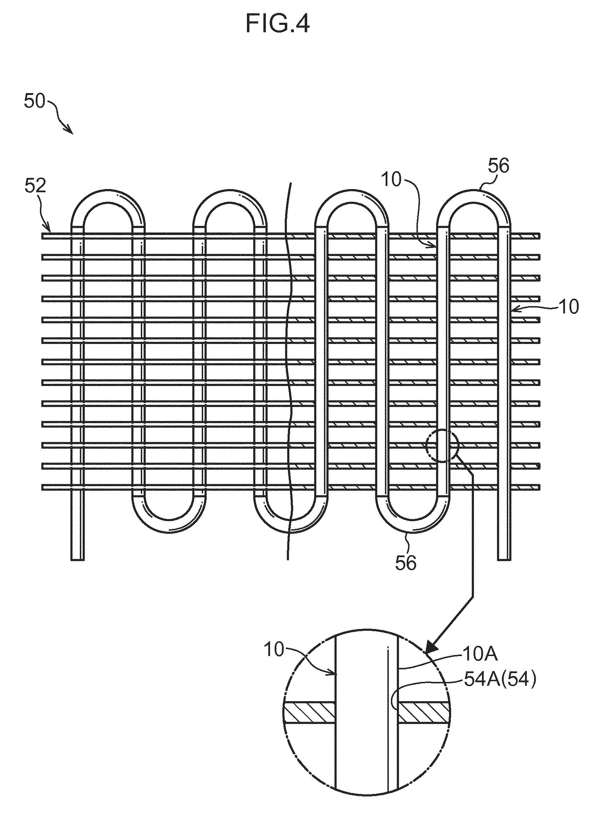

As illustrated in Fig. 4, the heat transfer tube 10 of the present exemplary embodiment is employed in a heat exchanger 50 installed in an air conditioning unit. The heat exchanger 50 is employed in heat exchange with a fluid used in a heat exchange section of the air conditioning unit. Note that the present invention is not limited to this configuration, and the heat exchanger 50 may be employed to cool coolant (an example of a fluid) used in a refrigerator cooling section installed in a refrigerator, or may be employed to cool cooling water (an example of a fluid) in an engine cooling device installed in a vehicle. Namely, the heat exchanger 50 of the present exemplary embodiment may be used in any device with a purpose of performing heat exchange with a fluid.

The heat exchanger 50 of the present exemplary embodiment includes the heat transfer tubes 10 and fins 52. The fins 52 are formed in plate shapes from a metal material (for example aluminum) (so-called metal plates), and are formed with through holes 54 penetrating in the plate thickness direction. The heat transfer tubes 10 are inserted through the through holes 54, and tube outer faces 10A, that are outer peripheral faces of the heat transfer tubes 10, are joined to hole walls 54A of the through holes 54. Heat is efficiently transmitted by the joins from the heat transfer tubes 10 to the fins 52, and from the fins 52 to the heat transfer tubes 10. Note that the heat exchanger 50 is an exemplary embodiment of a heat exchanger of the present invention.

Next, detailed explanation follows regarding the heat exchanger 50. As illustrated in Fig. 4, the heat exchanger 50 includes plural of the heat transfer tubes 10 placed parallel to one another in a row, with end portions of adjacent heat transfer tubes 10 coupled together by U-shaped tube connectors 56. Each of the heat transfer tubes 10 is inserted through the respective through holes 54 of the plural fins 52, disposed in a row with intervals between each other, and the respective tube outer faces 10A are joined to the respective hole walls 54A.

Next, explanation follows regarding the heat transfer tube 10 of the present exemplary embodiment.

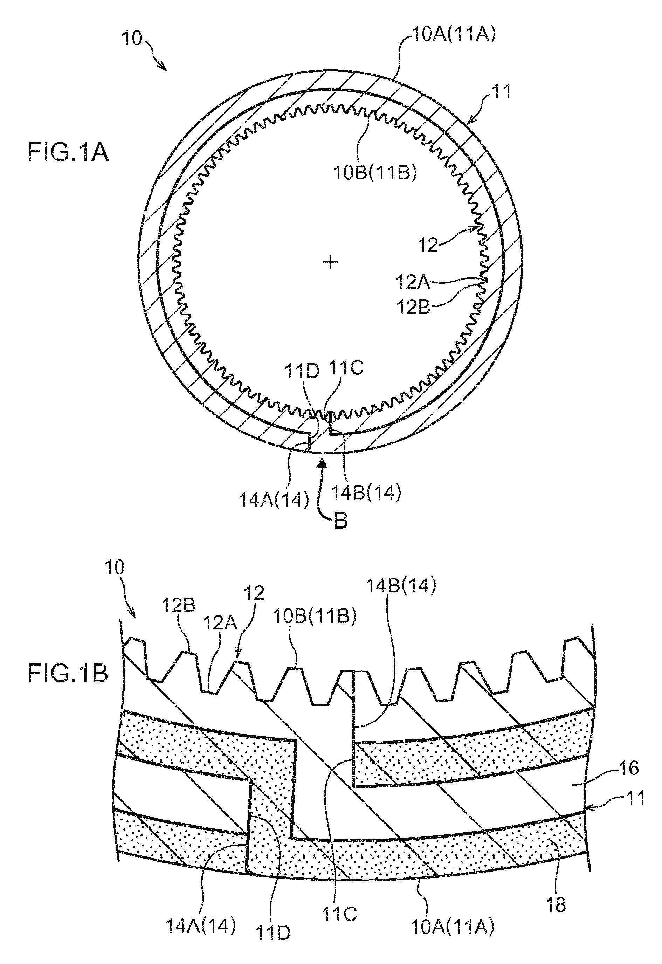

As illustrated in Fig. 1A, a tube inner face 10B, this being the inner circumferential face of the heat transfer tube 10, includes an undulating portion 12 (an example of a first undulating portion of the heat transfer tube of the present invention). Specifically, in the heat transfer tube 10, the undulating portion 12 is formed over the entire tube inner face 10B, and the tube outer face 10A has a substantially flat profile.

The heat transfer tube 10 is formed by bending a single metal sheet 11. Specifically, the heat transfer tube 10 is formed by rolling up the metal sheet 11 formed with the undulating portion 12 into a tube shape, and joining together overlapped rolled-up portions. Note that the heat transfer tube 10 of the present exemplary embodiment is a double ply rolled tube configured by a rolling the metal sheet 11 around twice.

In the heat transfer tube 10, a portion of an inner face 11B of the metal sheet 11 that has been rolled up into a tube shape configures the tube outer face 10A, and a portion of an outer face 11A of the metal sheet 11 that has been rolled up into a tube shape configures the tube inner face 10B.

An inside step face 14B is formed to the inner face 11B of the metal sheet 11 rolled up into a tube shape, between a roll-up direction inside end portion 11C (synonymous with an end portion on the inner circumferential side) and a roll-up direction outside end portion 11D (synonymous with an end portion on the outer circumferential side). The end portion 11C of the metal sheet 11 rolled up into a tube shape is abutted against and joined to the inside step face 14B. The height of the inside step face 14B is substantially the same as the sheet thickness of the metal sheet 11.

An outside step face 14A is formed to the outer face 11A of the metal sheet 11 rolled up into a tube shape, between the end portion 11C and the end portion 11D. The end portion 11D of the metal sheet 11 rolled up into a tube shape is abutted against and joined to the outside step face 14A. The height of the outside step face 14A is substantially the same as the sheet thickness of the metal sheet 11.

Note that in the present exemplary embodiment, an intermediate portion (a roll-up direction intermediate portion) between the end portion 11C and the end portion 11D of the metal sheet 11 rolled up into a tube shape is bent into a crank shape to form a stepped portion 14. One face of the stepped portion 14 configures the inside step face 14B, and the other face of the stepped portion 14 configures the outside step face 14A. In the present exemplary embodiment, the sheet thickness of the metal sheet 11 is substantially uniform. The external diameter and the internal diameter of the heat transfer tube 10 are accordingly substantially uniform around the circumference.

Moreover in the present exemplary embodiment, the external diameter and the internal diameter of the heat transfer tube 10 are substantially uniform around the circumference due to forming the stepped portion 14 to the metal sheet 11, and there is accordingly no need for processing to taper the end portion 11C side and the end portion 11D side of the metal sheet 11, thereby enabling the undulating portion 12 to be formed with good precision as far as the end portion 11 C of the metal sheet 11.

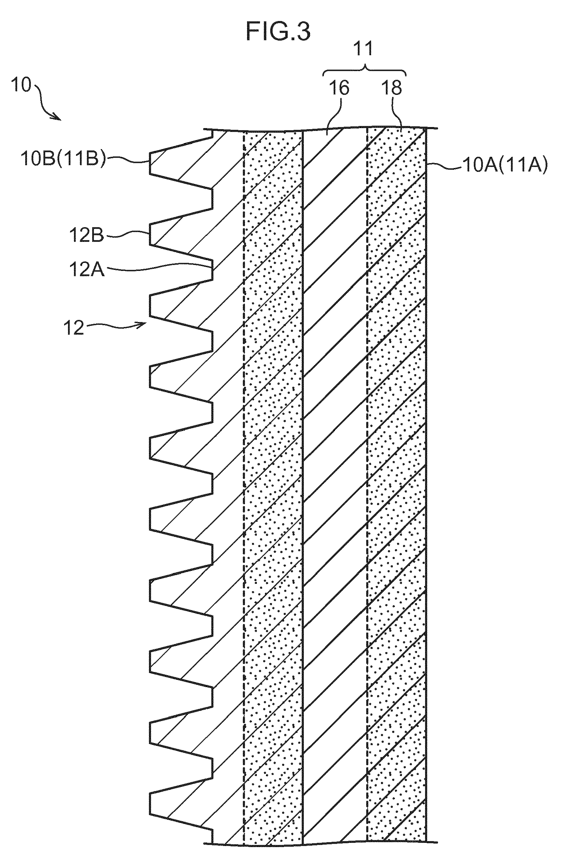

As illustrated in Fig. 1B and Fig. 3, the metal sheet 11 of the present exemplary embodiment is a metal sheet configured by a core material 16, formed from a metal material, and a covering material 18, affixed to the core material 16 and formed from a metal material with a lower melting point than the core material 16, namely a clad sheet.

The metal sheet 11 is configured from aluminum. More specifically, the metal sheet 11 is formed by affixing the covering material 18 that is formed from an aluminum alloy (for example, aluminum impregnated with silicon) to the core material 16 that is formed from pure aluminum. The covering material 18 forms the outer face 11A of the metal sheet 11 rolled up into a tube shape. The covering material 18 is moreover employed as a joining material (brazing filler) for joining together the overlapped rolled-up portions of the metal sheet 11 rolled up into a tube shape. The core material 16 forms the inner face 11B of the metal sheet 11 rolled up into a tube shape.

Note that in the present exemplary embodiment, the metal sheet 11 is configured from aluminum, however the present invention is not limited to such a configuration, and the metal sheet 11 may be configured from a metal material such as copper or iron.

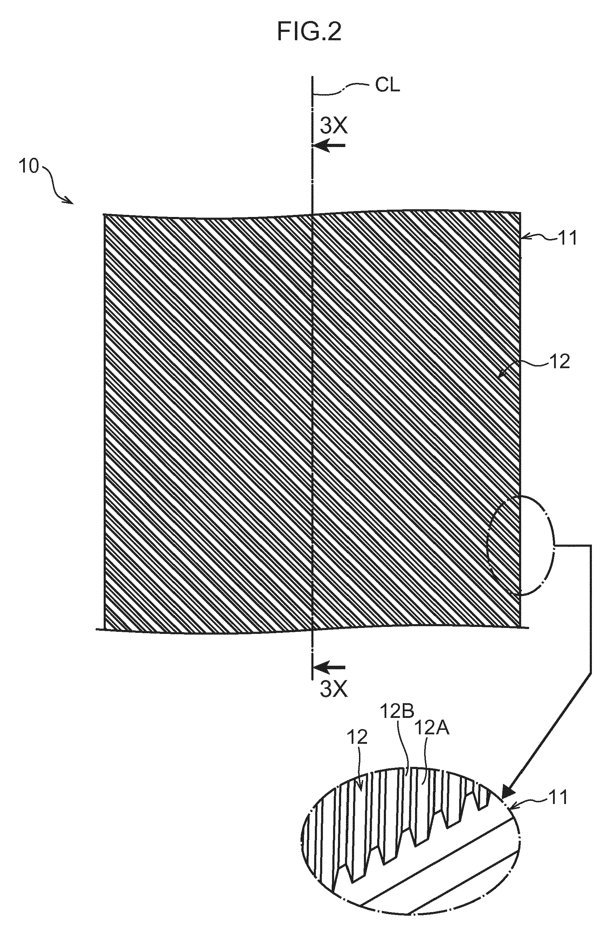

As illustrated in Fig. 1A and Fig. 2, the undulating portion 12 is configured by grooves 12A indented toward the radial direction outside of the heat transfer tube 10, formed at intervals around the circumferential direction of the heat transfer tube 10, and extending in a direction intersecting with the axial direction of the heat transfer tube 10 (the direction along the center line CL in Fig. 2), and by ridges 12B that are formed between adjacent grooves 12A to form projections toward the radial direction inside of the heat transfer tube 10. As illustrated in Fig. 2, the grooves 12A are preferably set with an angle of inclination of 15 degrees or greater with respect to the axial direction of the heat transfer tube 10.

Explanation follows regarding a forming device for forming the heat transfer tube 10 of the first exemplary embodiment.

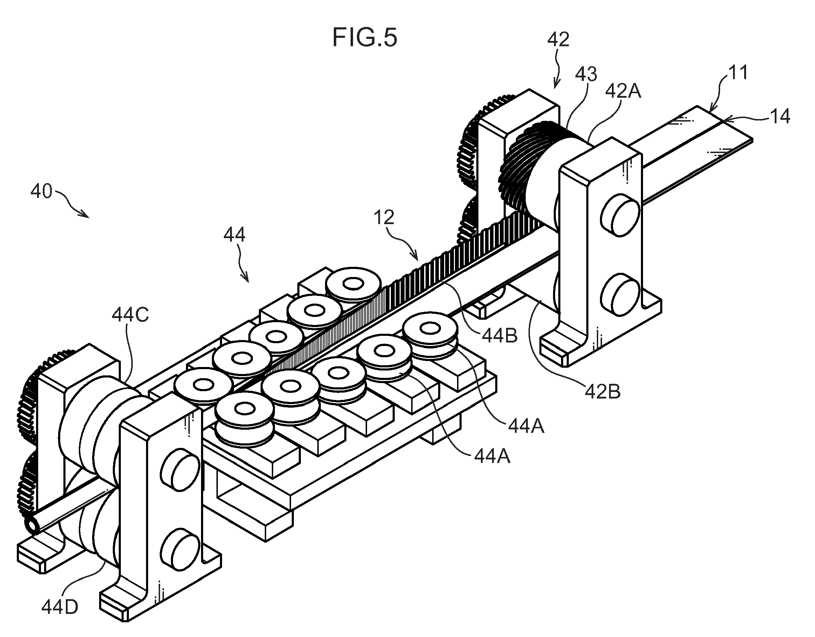

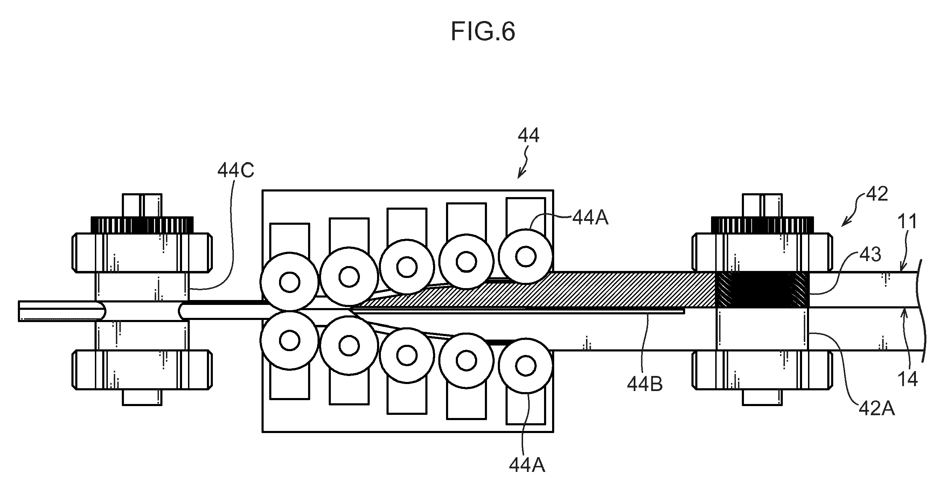

As illustrated in Fig. 5 and Fig. 6, a forming device 40 includes an undulation forming portion 42 that forms the undulating portion 12 on the metal sheet 11, and a forming portion 44 that performs roll-up forming (roll forming) to roll up the metal sheet 11 formed with the undulating portion 12 into a tube shape, to configure a pipe shape with a specific external diameter.

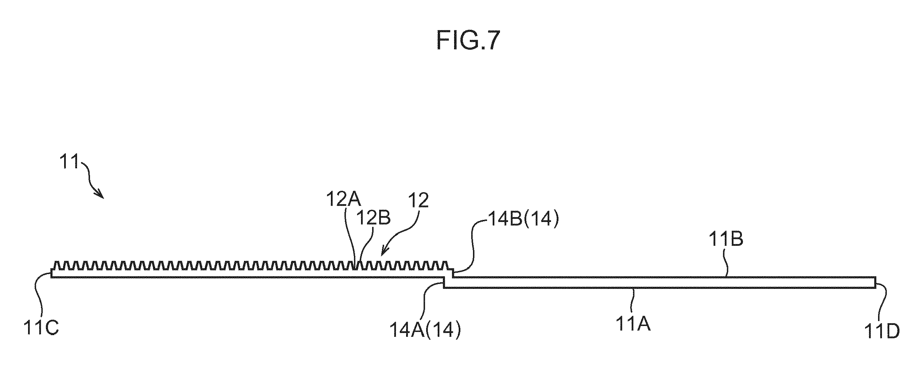

The undulation forming portion 42 includes a pair of rollers 42A, 42B that are disposed facing each other and rotate in synchronization. The rollers 42A, 42B are configured to rotate with the metal sheet 11 between them, feeding out the metal sheet 11 to the forming portion 44. The outer circumference of the roller 42A is formed with an undulating portion 43 corresponding to the undulating portion 12. The undulating portion 12 is accordingly formed by the undulating portion 43 of the roller 42A pressing against one face (the upper face in Fig. 7) of the metal sheet 11 nipped between the roller 42A and the roller 42B.

Note that the one face of the metal sheet 11 is the face corresponding to the inner face 11B of the metal sheet 11 rolled up into a tube shape, indicated by the reference numeral 11B in Fig. 7. The other face of the metal sheet 11 is the face corresponding to the outer face 11A of the metal sheet 11 rolled up into a tube shape, indicated by the reference numeral 11A in Fig. 7.

As illustrated in Fig. 5 and Fig. 6, the forming portion 44 includes plural forming rollers 44A that bend the metal sheet 11, a mandrel 44B around which the bent metal sheet 11 is wrapped, and rollers 44C, 44D that form the metal sheet 11 that has been wrapped around the mandrel 44B into a pipe shape with a specific external diameter. The forming rollers 44A are configured such that the metal sheet 11 is wrapped around the mandrel 44B while being progressively bent with the undulating portion 12 on the inside accompanying conveyance of the metal sheet 11. The rollers 44C, 44D are disposed facing each other, and are configured so as to rotate in synchronization so as to feed out the metal sheet 11 while applying pressure to form the metal sheet 11 that has been wrapped around the mandrel 44B into a pipe shape with a specific external diameter. Note that the rollers 44C, 44D are respectively formed with circumferential groove portions that configure a circle of the same size as the external diameter of the heat transfer tube 10 when the outer circumferences of the rollers 44C, 44D are in contact with each other.

Explanation follows regarding a manufacturing method of the heat transfer tube 10 of the first exemplary embodiment.

First, the elongated metal sheet 11 with the covering material 18 affixed to the core material 16 is prepared, and a width direction intermediate portion of the metal sheet 11 is bent into a crank shape to form the stepped portion 14, as illustrated in Fig. 7.

Next, the metal sheet 11 is set in the forming device 40 with the one face (the face formed by the core material 16) facing upward. The undulation forming portion 42 then forms the undulating portion 12 to the one face of the metal sheet 11. Note that the undulating portion 12 is formed to the one face of the metal sheet 11 in a range corresponding to the tube inner face 10B.

Next, the forming portion 44 wraps the metal sheet 11 formed with the undulating portion 12 around the mandrel 44B, with the undulating portion 12 on the inside. The metal sheet 11 is thereby rolled up into a tube shape with the undulating portion 12 on the inside, and roll-formed into a pipe shape with a specific external diameter.

Next, the metal sheet 11 rolled up into a tube shape is inserted through the through holes 54 of the fins 52. Then, the metal sheet 11 rolled up into a tube shape is heated together with the fins 52 to melt the covering material 18, and the covering material 18 is cooled and hardened in a state of close contact against the overlapped rolled-up portions of the metal sheet 11 that has been rolled up into a tube shape. The overlapped rolled-up portions of the metal sheet 11 rolled up into a tube shape are thereby joined (brazed) together. When this is performed, the covering material 18 forming the outer circumference of the metal sheet 11 rolled up into a tube shape is also joined to the hole walls 54A of the through holes 54. The heat transfer tube 10 is thus formed. The heat exchanger 50 provided with the heat transfer tube 10 is also formed.

In the present exemplary embodiment, the undulating portion 12 is formed to the one face of the metal sheet 11 after forming the stepped portion 14. However the present invention is not limited to such a configuration, and it is sufficient to form the stepped portion 14 prior to rolling up the metal sheet 11 into a tube shape. For example, the undulation forming portion 42 of the forming device 40 may be provided with functionality to form the stepped portion 14 to the metal sheet 11, and the undulation forming portion 42 may form the stepped portion 14 to the metal sheet 11.

Moreover, in the present exemplary embodiment, the metal sheet 11 rolled up into a tube shape is inserted into the through holes 54 of the fins 52 before heating the metal sheet 11 and the fins 52 together, however the present invention is not limited to such a configuration, and the overlapped rolled-up portions of the metal sheet 11 rolled up into a tube shape may be joined (brazed) together to form the heat transfer tube 10 before inserting the heat transfer tube 10 through the through holes 54 of the fins 52, and then reheating and cooling the heat transfer tube 10 to join the heat transfer tube 10 to the fins 52 and form the heat exchanger 50.

Explanation follows regarding operation and advantageous effects of the heat transfer tube 10 and the heat exchanger 50 of the first exemplary embodiment.

Due to providing the undulating portion 12 to the tube inner face 10B of the heat transfer tube 10, the tube inner face 10B has a larger surface area than when the tube inner face is flat, thereby raising the heat transmission efficiency from the fluid to the heat transfer tube 10 and from the heat transfer tube 10 to the fluid (in other words, the heat transmission efficiency between the fluid and the heat transfer tube 10). Namely, the heat transfer tube 10 has excellent heat transfer characteristics.

Due to forming the heat transfer tube 10 by rolling up the metal sheet 11 into a tube shape with the corrugated portion 12 formed in advance, there are fewer restrictions to the shape and pattern of the undulating portion 12 than when, for example, the inner face of a metal tube formed by an extrusion process is subsequently formed (machined) with grooves (an undulating portion). In other words, there are high degrees of freedom for design in the undulating portion 12. The heat transmission efficiency between the fluid and the heat transfer tube 10 can accordingly be raised even further by making adjustments to the shape and pattern of the undulating portion 12 of the heat transfer tube 10.

Since the metal sheet 11 is rolled up into a tube shape and the overlapped rolled-up portions are joined together in the heat transfer tube 10, the length of the joint portion from the tube inside to the tube outside can be made longer than when a metal sheet is bent and end portions are joined (welded) together. Therefore, even when there is rapid corrosion at the joint portion, the spread of corrosion from the tube outside to the tube inside (or from the tube outside to the tube inside) of the joint portion can be delayed. Namely, the heat transfer tube 10 enables fluid leakage to be prevented over a long period. In particular, the heat transfer tube 10 enables sufficient joint portion length to be secured due to rolling the metal sheet 11 around twice.

As illustrated in Fig. 1B, in the heat transfer tube 10, the end portion 11C is abutted against and joined to the inside step face 14B, and the end portion 11D is abutted against and joined to the outside step face 14A of the metal sheet 11 rolled up into a tube shape. An even longer length can accordingly be secured for the joint portion from the tube inside to the tube outside.

The heat transfer tube 10 moreover enables a reduction in weight and a cost saving, while securing heat transmission efficiency, due to configuring the metal sheet 11 from aluminum.

The heat exchanger 50 provided with the heat transfer tube 10 has increased heat transmission efficiency from the heat transfer tube 10 to the fins 52 and from the fins 52 to the heat transfer tube 10 (in other words, heat transmission efficiency between the heat transfer tube 10 and the fins 52) due to joining the tube outer faces 10A of the heat transfer tubes 10 to the hole walls 54A of the through holes 54 formed to the fins 52. Accordingly, heat can be efficiently transmitted between the fluid and the fins 52 through the heat transfer tube 10, thereby improving the heat exchange performance of the heat exchanger 50.

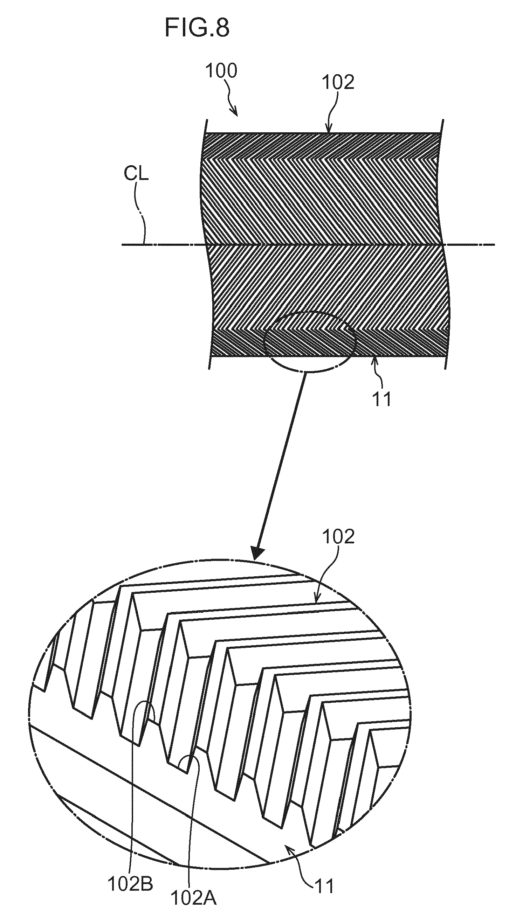

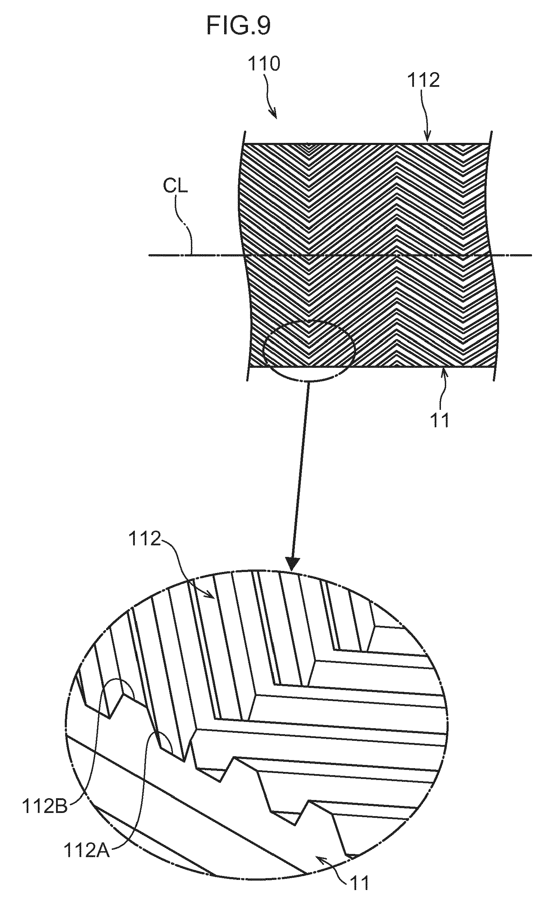

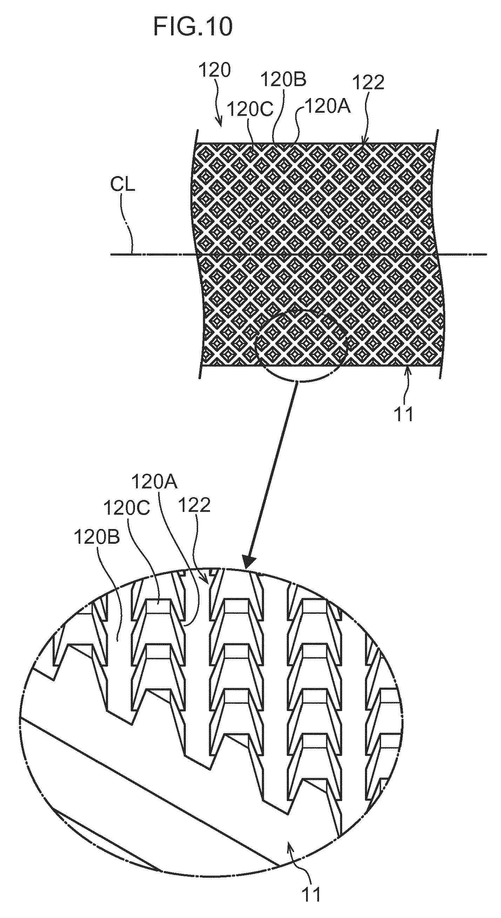

As illustrated in Fig. 2, the first exemplary embodiment is configured such that the grooves 12A and the ridges 12B configuring the undulating portion 12 extend in a direction intersecting with the axial direction of the heat transfer tube 10 (the direction along the center line CL in Fig. 2), however the present invention is not limited to such a configuration. As in a heat transfer tube 100 of a first modified example illustrated in Fig. 8, configuration may be made such that grooves 102A and ridges 102B configuring an undulating portion 102 extend in a zigzag shape with respect to an axis orthogonal direction of the heat transfer tube 100 (a direction orthogonal to the center line CL in Fig. 8). Moreover, as in a heat transfer tube 110 of a second modified example illustrated in Fig. 9, configuration may be made such that grooves 112A and ridges 112B configuring an undulating portion 112 extend in a zigzag shape following the axial direction of the heat transfer tube 110 (the direction along the center line CL in Fig. 9). Moreover, as in a heat transfer tube 120 of a third modified example illustrated in Fig. 10, an undulating portion 122 may be configured by plural grooves 122A extending in a direction intersecting with the axial direction of the heat transfer tube 120, plural grooves 122B extending in a direction intersecting with the grooves 122A, and projection portions 122C that are demarcated by the grooves 122A and the grooves 122B. Moreover, the grooves configuring the various undulating portions may extend in a straight line shape or in a curved line shape, and may be continuous or intermittent. Note that the configurations of the respective undulating portions 102, 112, 122 of the first to the third modified examples may also be applied to any of the second exemplary embodiment to the fourth exemplary embodiment, described later.

In the first exemplary embodiment, the undulating portion 12 is formed to the one face of the metal sheet 11 in a range corresponding to the tube inner face 10B, and the heat transfer tube 10 is formed by rolling up the metal sheet 11 into a tube shape with the undulating portion 12 on the inside and joining together the overlapped rolled-up portions, however the present invention is not limited thereto. The undulating portion 12 may be formed to substantially the entire one face of the metal sheet 11, and the heat transfer tube 10 may be formed by rolling up the metal sheet 11 into a tube shape with the undulating portion 12 on the inside, and joining together the overlapped rolled-up portions. Note that a configuration in which the undulating portion 12 is formed to substantially the entire one face of the metal sheet 11 may also be applied to the second and third exemplary embodiments, described later.

Next, explanation follows regarding a heat transfer tube 60 and a manufacturing method of the heat transfer tube 60 of a second exemplary embodiment of a heat transfer tube and a heat transfer tube manufacturing method of the present invention, with reference to the drawings. Note that configurations similar to the first exemplary embodiment are allocated the same reference numerals, and explanation thereof is omitted.

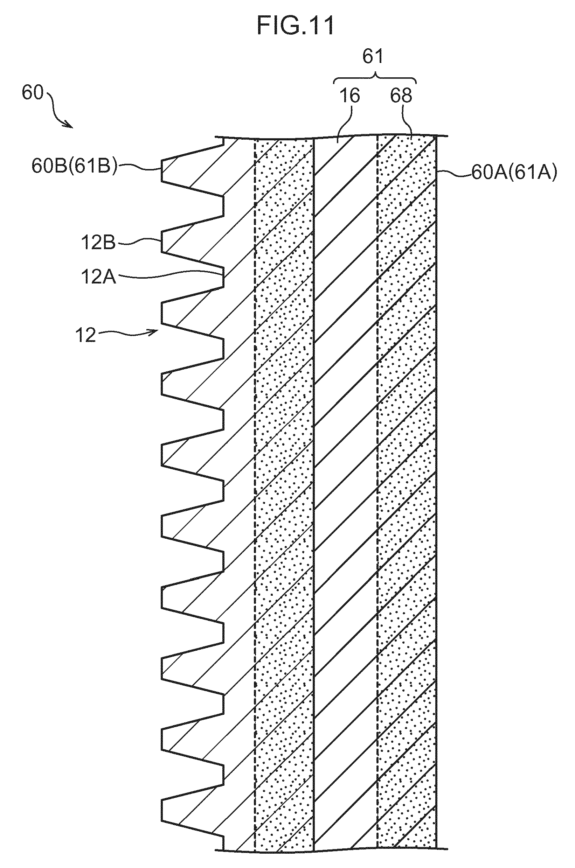

As illustrated in Fig. 11, the heat transfer tube 60 of the present exemplary embodiment is similar to the heat transfer tube 10 of the first exemplary embodiment, with the exception of the configuration of a metal sheet 61.

The metal sheet 61 is a metal sheet configured by a core material 16, and a covering material 68, affixed to the core material 16 and formed from a metal material with a lower natural electrode potential (corrosion potential) than the core material 16, namely a clad sheet. The metal sheet 61 of the present exemplary embodiment is configured from aluminum. Specifically, the metal sheet 61 is formed by affixing the covering material 68 that is formed from an aluminum alloy (for example, aluminum impregnated with zinc) to the core material 16 that is formed from pure aluminum. The covering material 68 forms an outer face 61A of the metal sheet 61 when rolled up into a tube shape. Namely, a tube outer face 60A of the heat transfer tube 60 is formed by the covering material 68. The core material 16 forms an inner face 61B of the metal sheet 61 when rolled up into a tube shape. Namely, a tube inner face 60B of the heat transfer tube 60 is formed by the core material 16.

Explanation follows regarding a manufacturing method of the heat transfer tube 60 of the present exemplary embodiment.

In the manufacturing method of the heat transfer tube 60 of the present exemplary embodiment, the metal sheet 61 is rolled up into a tube shape with the undulating portion 12 on the inside, and the metal sheet 61 rolled up into a tube shape is inserted through the through holes 54 of the fins 52. Then, molten aluminum alloy (brazing filler) is injected (for example, infused by capillary action) into a gap between the overlapped rolled-up portions of the metal sheet 11 rolled up into a tube shape, and the overlapped rolled-up portions are joined together (brazed together). Note that an aluminum alloy layer employed as the brazing filler is omitted from illustration in Fig. 11. The heat transfer tube 60 is formed in this manner. Molten aluminum alloy (brazing filler) is also injected into gaps between the hole walls 54A of the fins 52 and the tube outer face 60A of the heat transfer tube 60, thereby joining the tube outer face 60A of the heat transfer tube 60 to the hole walls 54A to form the heat exchanger.

Note that in the manufacturing method of the heat transfer tube 60 of the present exemplary embodiment, the molten aluminum alloy (brazing filler) is injected into a gap between the overlapped rolled-up portions of the metal sheet 11 rolled up into a tube shape, and the overlapped rolled-up portions are joined (brazed) together, before injecting the molten aluminum alloy (brazing filler) between the tube outer face 60A of the heat transfer tube 60 and the hole walls 54A and joining the tube outer face 60A of the heat transfer tube 60 to the hole walls 54A. However, the present invention is not limited to such a configuration, and for example, aluminum alloy (brazing filler) with a lower melting point than the core material 16 and the fins 52 may be affixed to one or both faces of the fins 52 in advance. Then, when the metal sheet 61 rolled up into a tube shape is heated together with the fins 52, the molten aluminum alloy (brazing filler) enters the gap between the overlapped rolled-up portions of the metal sheet 61 rolled up into a tube shape, and gaps between the hole walls 54A and the tube outer face 60A, such that after cooling the aluminum alloy (brazing filler), the overlapped rolled-up portions of the metal sheet 61 rolled up into a tube shape are joined together, and the tube outer face 60A of the heat transfer tube 60 is joined to the hole walls 54A.

Next, explanation follows regarding operation and advantageous effects of the heat transfer tube 60 of the present exemplary embodiment. Note that explanation regarding operation and advantageous effects of the present exemplary embodiment that are similar to the operation and advantageous effects of the first exemplary embodiment is omitted where appropriate.

In the heat transfer tube 60, the covering material 68 that is formed from a metal material with a lower natural electrode potential than the core material 16 rapidly corrodes by acting as a sacrificial anode, and suppressing the advance of corrosion in the core material 16. In particular, in the heat transfer tube 60 the advance of corrosion in the core material 16 can be effectively suppressed due to forming the tube outer face 60A from the covering material 68 that acts in this manner. The heat transfer tube 60 accordingly enables fluid leakage to be prevented over a long period.

Moreover, in the heat transfer tube 60, similarly to the heat transfer tube 10 of the first exemplary embodiment illustrated in Fig. 1B, the end portion 11D is abutted against and joined to the outside step face 14A of the metal sheet 11 rolled up into a tube shape, thereby preventing external exposure of the core material 16. It is accordingly possible to suppress a reduction in the lifespan of the heat transfer tube 60 due to corrosion of the core material 16 originating at exposed portions, in contrast to when the core material 16 is externally exposed, for example. Namely, preventing external exposure of the core material 16 enables corrosion of the core material 16 to be suppressed, thereby extending the lifespan of the heat transfer tube 60.

Next, explanation follows regarding a heat transfer tube 70 and a manufacturing method of the heat transfer tube 70 of a third exemplary embodiment of a heat transfer tube and a heat transfer tube manufacturing method of the present invention, with reference to the drawings. Note that configurations similar to the first exemplary embodiment are allocated the same reference numerals, and explanation thereof is omitted.

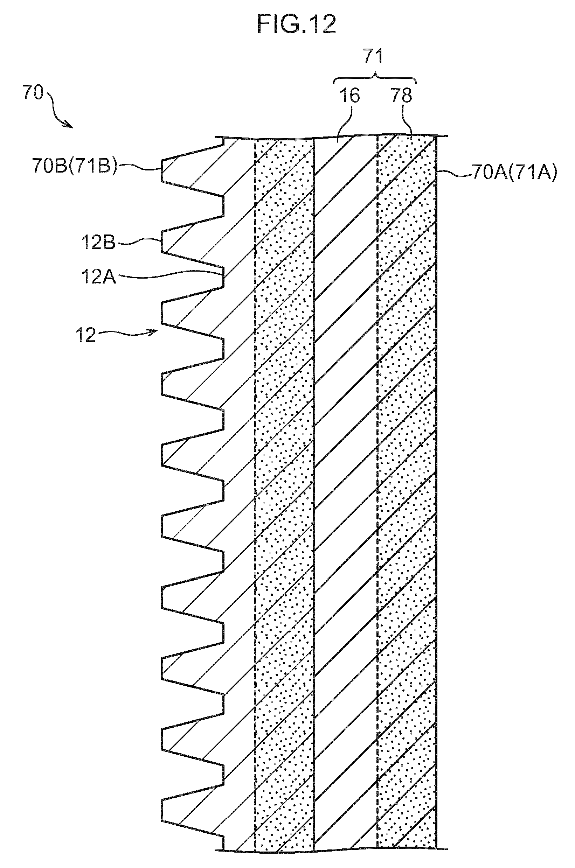

As illustrated in Fig. 12, the heat transfer tube 70 of the present exemplary embodiment is similar to the heat transfer tube 10 of the first exemplary embodiment, with the exception of the configuration of a metal sheet 71.

The metal sheet 71 is a metal sheet configured by a core material 16, and a covering material 78, affixed to the core material 16 and formed from a metal material with a lower natural electrode potential and melting point than a core material 16, namely a clad sheet. The metal sheet 71 of the present exemplary embodiment is configured from aluminum. Specifically, the metal sheet 71 is formed by affixing the covering material 78 that is formed from an aluminum alloy (for example, aluminum impregnated with silicon and zinc) to the core material 16 that is formed from pure aluminum. The covering material 78 forms an outer face 71A of the metal sheet 71 when rolled up into a tube shape. Namely, a tube outer face 70A of the heat transfer tube 70 is formed by the covering material 78. The core material 16 forms an inner face 71B of the metal sheet 71 when rolled up into a tube shape. Namely, a tube inner face 70B of the heat transfer tube 70 is formed by the core material 16.

Explanation follows regarding a manufacturing method of the heat transfer tube 70 of the present exemplary embodiment.

In the manufacturing method of the heat transfer tube 70 of the present exemplary embodiment, the metal sheet 71 is rolled up into a tube shape with the undulating portion 12 on the inside, and the metal sheet 71 rolled up into a tube shape is inserted through the through holes 54 of the fins 52. Next, the metal sheet 71 rolled up into a tube shape is heated together with the fins 52, melting the covering material 78, which is then cooled and hardened. Accompanying this, the overlapped rolled-up portions of the metal sheet 11 rolled up into a tube shape are joined together, forming the heat transfer tube 70. When this is performed, the tube outer face 70A of the heat transfer tube 70 is also joined to the hole walls 54A of the fins 52, forming the heat exchanger.

Next, explanation follows regarding operation and advantageous effects of the heat transfer tube 70 of the present exemplary embodiment. Note that explanation regarding operation and advantageous effects of the present exemplary embodiment that are similar to the operation and advantageous effects of the first exemplary embodiment is omitted where appropriate.

In the heat transfer tube 70, the covering material 78 that is formed from a metal material with a lower natural electrode potential than the core material 16 rapidly corrodes by acting as a sacrificial anode, and suppressing the advance of corrosion in the core material 16. In particular, in the heat transfer tube 70 the advance of corrosion in the core material 16 can be effectively suppressed due to forming the tube outer face 70A from the covering material 78 that acts in this manner. The heat transfer tube 70 accordingly enables fluid leakage to be prevented over a long period.

Moreover, in the heat transfer tube 70, similarly to the heat transfer tube 10 of the first exemplary embodiment illustrated in Fig. 1B, the end portion 11D is abutted against and joined to the outside step face 14A of the metal sheet 11 rolled up into a tube shape, thereby preventing external exposure of the core material 16. It is accordingly possible to suppress a reduction in the lifespan of the heat transfer tube 70 due to corrosion of the core material 16 originating at exposed portions, in contrast to when the core material 16 is externally exposed, for example. Namely, preventing external exposure of the core material 16 enables corrosion of the core material 16 to be suppressed, thereby extending the lifespan of the heat transfer tube 70.

Moreover, when forming the heat transfer tube 70, it is not necessary to separately inject molten aluminum alloy (brazing filler) into the gap between the overlapped rolled-up portions of the metal sheet 11 rolled up into a tube shape, therefore enabling a simpler manufacturing process than in the second exemplary embodiment. Moreover, since molten aluminum alloy is present between the entire overlapped rolled-up portions of the metal sheet 11 rolled up into a tube shape, fluid leakage can be prevented over an even longer period.

Explanation follows regarding a heat transfer tube 80 and a manufacturing method of the heat transfer tube 80 of a fourth exemplary embodiment of a heat transfer tube and a heat transfer tube manufacturing method of the present invention, with reference to the drawings. Note that configurations similar to the first exemplary embodiment are allocated the same reference numerals, and explanation thereof is omitted.

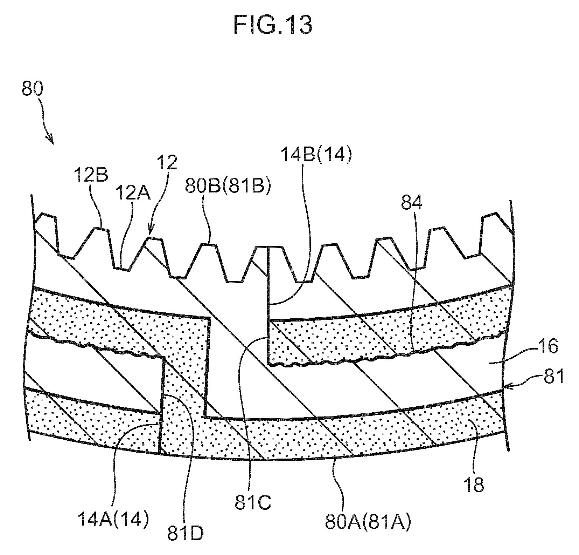

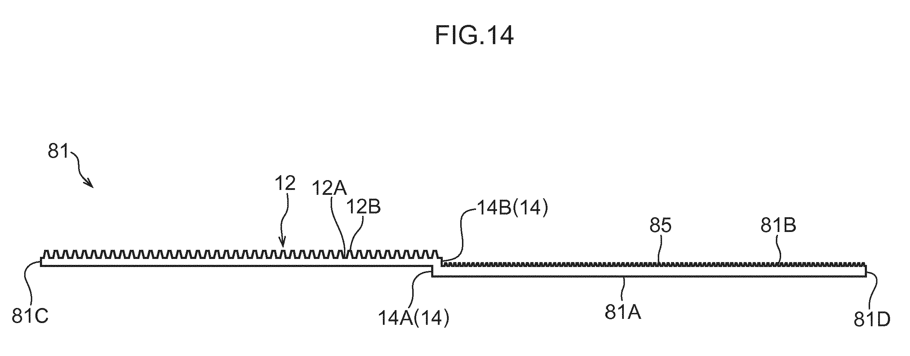

As illustrated in Fig. 13 and Fig. 14, the heat transfer tube 80 of the present exemplary embodiment is similar to the heat transfer tube 10 of the first exemplary embodiment, with the exception of the configuration of a metal sheet 81.

In the heat transfer tube 80, an undulating portion 84 (an example of a second undulating portion of a heat transfer tube of the present invention), that has a different profile to the undulating portion 12 and a smaller height difference than the undulating portion 12, is formed to an inner face 81B at an overlapped rolled-up portion with an outer face 81A in the metal sheet 81 when rolled up into a tube shape. Namely, the inner face 81B of the metal sheet 81 rolled up into a tube shape is respectively formed with the undulating portion 12 and the undulating portion 84. Note that the undulating portion 12 and the undulating portion 84 are both formed to a core material 16 of the metal sheet 81.

Note that in Fig. 13, the reference numeral 80A indicates the tube outer face of the heat transfer tube 80, and the reference numeral 80B indicates the tube inner face of the heat transfer tube 80. The reference numeral 81C indicates a roll-up direction inside end portion of the metal sheet 81 when rolled up into a tube shape, and the reference numeral 81D indicates a roll-up direction outside end portion of the metal sheet 81 when rolled up into a tube shape.

Explanation follows regarding a manufacturing method of the heat transfer tube 80 of the present exemplary embodiment.

In the manufacturing method of the heat transfer tube 80 of the present exemplary embodiment, firstly the one face on the core material 16 side of the metal sheet 81, to which a stepped portion 14 has been formed, is formed with the corrugated portion 12 at a portion that will form the tube inner face 80B. An undulating portion 85, with lower rigidity (for example with ridges that are narrower in width) than the undulating portion 12, is formed to the remainder of the one face of the metal sheet 81. Next, the metal sheet 81 is wrapped around the mandrel 44B with the undulating portion 12 on the inside, and the rolled up metal sheet 81 is formed into a pipe shape with a specific external diameter by the rollers 44C, 44D. When this is performed, the undulating portion 85 with lower rigidity than the undulating portion 12 is squashed, such that the shape of the undulating portion 12 is maintained. Then the overlapped rolled-up portions of the metal sheet 81 rolled up into a tube shape are joined together using a similar method to in the first exemplary embodiment to form the heat transfer tube 80. Note that the undulating portion 84 of the heat transfer tube 80 is configured by the squashed undulating portion 85, and when heated and melted, the undulating portion 84 side face of the covering material 18 assumes a shape corresponding to the undulating portion 84.

Note that, for example, the metal sheet 81 may be formed with the undulating portion 85 by forming an undulating portion corresponding to the undulating portion 85 adjacent to the undulating portion 43 that is formed to the roller 42A of the forming device 40.

Next, explanation follows regarding operation and advantageous effects of the heat transfer tube 80 of the present exemplary embodiment. Note that explanation regarding operation and advantageous effects of the present exemplary embodiment that are similar to the operation and advantageous effects of the first exemplary embodiment is omitted where appropriate.

In the heat transfer tube 80, due to forming the undulating portion 84 to the overlapped rolled-up portion of the inner face 81B with the outer face 81A in the metal sheet 81 when rolled up into a tube shape, the joint strength of the overlapped rolled-up portion of the metal sheet 81 rolled up into a tube shape is raised due to increasing the joint surface area in comparison, for example, to when the overlapped rolled-up portion of the inner face 81B with the outer face 81A is formed with a flat profile. The length of the joint portion from the tube inside to the tube outside is also further increased.

In the present exemplary embodiment, the undulating portion 85 of lower rigidity than the undulating portion 12 is squashed during manufacture of the heat transfer tube 80, and the undulating portion 84 of a different profile to the undulating portion 12 and a smaller height difference than the undulating portion 12 is formed at the rolled-up portion of the inner face 81B that has been overlapped with the outer face 81A of the metal sheet 81 rolled up into a tube shape. However the present invention is not limited to such a configuration, and for example, configuration may be made such that the undulating portion 85 is squashed during manufacture of the heat transfer tube 80 to form the undulating portion 84, having of a different profile to the undulating portion 12 and the same, or a larger, height difference than the undulating portion 12, at the rolled-up portion of the inner face 81B that has been overlapped with the outer face 81A of the metal sheet 81 rolled up into a tube shape. The joint surface area is still increased in such cases, thereby enabling the advantageous effect of increasing the joint strength at the overlapped rolled-up portions of the metal sheet 81 rolled up into a tube shape to be adequately obtained.

Note that the configuration of the present exemplary embodiment of forming the undulating portion 84 to the inner face 81B at an overlapped rolled-up portion with the outer face 81A of the metal sheet 81 rolled up into a tube shape may also be applied to the second exemplary embodiment or the third exemplary embodiment.

In the first exemplary embodiment, the metal sheet 11 is a clad sheet configured from the core material 16 and the covering material 18, however the present invention is not limited thereto, and the metal sheet 11 may be a metal sheet configured by the core material 16 alone. In such cases, configuration may be made such that, after rolling up the metal sheet 11 into a tube shape, molten joining material (brazing filler) may be injected into the gap between the overlapped rolled-up portions to join together the overlapped rolled-up portions of the metal sheet 11 rolled up into a tube shape.

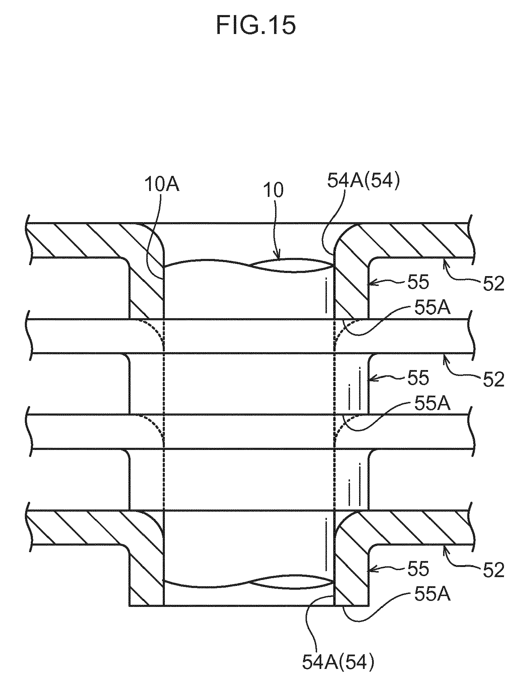

Moreover, in the first exemplary embodiment, the through holes 54 are formed by punching through the plate shaped fins 52, however the present invention is not limited thereto, and as illustrated in Fig. 15, the through holes 54 may be formed by burring the fins 52. In such cases, the tube outer faces 10A of the heat transfer tubes 10 are joined to hole walls 54A that configure the inner walls of ring shaped upright portions 55 formed by the burring, thereby increasing the joint surface area and raising the heat transmission efficiency between the heat transfer tube 10 and the fins 52. Note that the configuration of forming the through holes 54 in the fins 52 by burring may also be applied to any one of the second exemplary embodiment to the fourth exemplary embodiment.

Moreover, the fins 52 are configured from clad sheets including a core material (for example, pure aluminum), and a covering material with a lower natural electrode potential than the core material (for example, aluminum impregnated with zinc), affixed to the core material. The through holes 54 are formed to the fins 52 by burring, as described above. As illustrated in Fig. 15, the heat transfer tube 10 is then inserted through the respective through holes 54 in the plural fins 52, with an end portion 55A of the upright portion 55 of one fin 52 out of adjacent fins 52 contacting the plate face of the other fin 52 at the periphery of the through hole 54, covering the tube outer face 10A of the heat transfer tube 10 with the plural fins 52. Since the portions of the heat transfer tube 10 covered by the fins 52 are not externally exposed, corrosion of the heat transfer tube 10 can be effectively suppressed over a long period. Note that the configuration described above, in which burring is used to form the through holes 54 in the fins 52 configured from clad sheets, and the tube outer face 10A of the heat transfer tube 10 is covered by the plural fins 52, may also be applied to any of the second exemplary embodiment to the fourth exemplary embodiment.

The heat transfer tube 10 of the first exemplary embodiment is a double ply rolled tube configured by rolling the metal sheet 11 around twice, however the present invention is not limited to such a configuration, and the metal sheet 11 may be rolled up more than twice to configure a multi-ply rolled tube. The heat transfer tube 10 may also be configured by a rolled pipe formed by rolling the metal sheet 11 less than twice. In such cases, in order to secure the length of the joint portion, the width of the overlapped rolled-up portions of the metal sheet 11 rolled up into a tube shape must at least be greater than the sheet thickness of the metal sheet 11. Note that the above configuration may also be applied to any out of the second exemplary embodiment to the fourth exemplary embodiment.

Explanation has been given above regarding exemplary embodiments of the present invention, however these exemplary embodiments are merely examples thereof, and various modifications may be implemented within a range not departing from the spirit of the present invention. Obviously, the scope of rights encompassed by the present invention is not limited by these exemplary embodiments.

Note that the disclosure of Japanese Patent Application No. 2013-182566, filed on September 3, 2013, is incorporated in its entirety by reference herein.

All cited documents, patent applications and technical standards mentioned in the present specification are incorporated by reference in the present specification to the same extent as if the individual cited document, patent application, or technical standard was specifically and individually indicated to be incorporated by reference.

## Claims

1. A heat transfer tube provided with a first undulating portion at a tube inner face, wherein the heat transfer tube is formed by rolling up a metal sheet formed with the first undulating portion into a tube shape, and joining together overlapped rolled-up portions of the metal sheet.

2. The heat transfer tube of claim 1, wherein:
an outside step face between a roll-up direction inside end portion and a roll-up direction outside end portion is formed at an outer face of the metal sheet rolled up into a tube shape, and
the roll-up direction outside end portion is abutted against and joined to the outside step face.

3. The heat transfer tube of either claim 1 or claim 2, wherein:
an inside step face between a roll-up direction inside end portion and a roll-up direction outside end portion is formed at an inner face of the metal sheet rolled up into a tube shape, and
the roll-up direction inside end portion is abutted against and joined to the inside step face.

4. The heat transfer tube of any one of claim 1 to claim 3, wherein a second undulating portion with a different profile from the first undulating portion is formed at an inner face of an overlapped rolled-up portion of the metal sheet rolled up into a tube shape.

5. The heat transfer tube of any one of claim 1 to claim 4, wherein the metal sheet is configured from aluminum.

6. A method of manufacturing a heat transfer tube provided with an undulating portion at a tube inner face, the method comprising:
forming the undulating portion at a metal sheet;
rolling up the metal sheet into a tube shape with the undulating portion at an inner side; and
joining together overlapped rolled-up portions of the metal sheet rolled up into a tube shape.

7. A heat exchanger, comprising:
the heat transfer tube of any one of claim 1 to claim 5; and
a metal fin that is configured in a plate shape and formed with a through hole penetrating in a plate thickness direction, the heat transfer tube being inserted into the through hole and an outer peripheral face of the heat transfer tube being joined to a hole wall of the through hole.
